# EUROPEAN PATENT APPLICATION

(11) **EP 1 215 573 A1**
(43) Date of publication of application: **19.06.2002**
(21) Application number: 00126589.1
(22) Date of filing: 13.12.2000
(51) Int. Cl.: G06F 9/46

(54) **Local and remote processing**

(71) Applicant: SUN MICROSYSTEMS, INC., Palo Alto, California 94303 (US)
(72) Inventor: Bauer, Mathias, 22559 Hamburg (DE); Heilig, Jörg, 22145 Hamburg (DE)
(74) Representative: HOFFMANN - EITLE

(57) **Abstract**

Client and server system for providing local or remote services. A user may select one of a client unit and a server unit for providing a desired service on a data file, in case the server unit and the client unit both have the resources for the desired service. The user may select the client unit or the server unit upon requesting a particular operation or service on a data file or may enter pre-selections according to which the client unit or the server unit will be selected for execution of the operation. A client application program and a server application program for providing the service may be divided into at least two modules and the client unit and server unit may be selected for executing the first and second module.

## Description

### Field of the Invention

The present invention relates to local and remote processing of a data file in a client and server system.

### Background of the Invention

Computers may be conveniently used for the widest range of applications, e.g. ranging from simple editing of text documents to complex distributed applications involving a large number of data processing units and involving the transfer of data between the data processing units.

With the growing number of data processing units having access to computer networks, such as to local area networks or worldwide networks, e.g. company wide intranets or the Internet, a growing number of applications is offered which involves a plurality of data processing units. Such applications may be for example found in the field of home banking, office applications, remote e-mail applications, supercomputing applications and similar.

Applications are known, where one data processing unit serves as a client and communicates with another data processing unit acting as a server. In such a scenario the client may request the execution of an application at the server and may receive a processing result from the server via a network or communication link connecting the client and server.

Further, systems are known where a plurality of clients may connect to a portal for executing applications. A portal may be a large site in a network including a plurality of servers that provide a variety of services including for example office applications, searching functions, news functions, e-mail applications, discussion groups, online shopping and links to other sites in a network. A portal may thus be a general purpose site offering the capability to perform applications on behalf of a client or assisting a client in executing the application.

Generally, in a client and server or portal scenario the server may be a large computing device which has the resources to store and execute application programs which are used in providing service to a client. Since the applications and sufficient computing power is generally available at a server, the client may be a data processing unit with lesser computing resources functioning as an interface to receive user commands required for execute the desired application program in providing the requested service, i.e. to transmit commands from the client to the server, and further to receive and for example display computation results from the server.

For example, in case a user at a client wishes to access a document, e.g. a web-page available at the server or another location, the server retrieves the requested web-page and prepare, i.e. renders, the web-page for display at the client. Subsequently, display frames for local visualization at the client are transmitted from the server to the client and the user can view the desired web-page.

In case the client for example wishes to scroll through the document, a corresponding input command is received at the client and transmitted via the network to the server which prepares a corresponding display content for transfer to the client in order to enable the client to locally visualize the changed display content. Similarly, in case the user wishes to edit the document, respective commands could be transmitted from the client to the server and accordingly be processed at the server. Changed display contents are then transmitted to the client for local visualization.

However, it is possible that not only the server has the necessary resources to provide a desired service, a client may already have the required resources for providing the service, such as rendering operations or editing a data file. Corresponding application programs may thus be available at both the client side and the server side for performing a desired operation, i.e. providing a desired service.

Usually, in a case where an application program is available at a server and at a client for providing a specific operation or service, upon receiving a corresponding instruction at the client, the client proceeds to activate the application program available at the client unit in providing the desired operation or service. For example in case an application for providing an editing service is available at both the client and the server, upon receiving an editing command, the client will generally select the locally available application programs for editing a file.

However, in this case a data file may need to be transmitted to the client which for a large data file may incur increased latency. Specifically, it may be particularly inconvenient to provide a service locally at the client in case a data file to be handled is maintained at the server unit, as in this case the data file would be transmitted to the client and back to the server unit after a service session. If the client unit is connected to the server unit via a low bandwidth connection, latency may be unacceptable. A similar problem may occur if the client has little processing resources, and the provision of the service or operation requires high processing capabilities, for example as available at the server unit. In this case delays may also be unacceptable.

On the other hand it may be advantageous to provide a service or operation on a data file locally at a client unit, for example in case a document is edited, as in this case a user input should be displayed at the client unit without any latency, if possible. However, in case the data file is handled at the server unit, a user input would be transmitted to the server unit, a corresponding change between content would be prepared and transferred back to the client unit for local visualization, possibly resulting in high latency.

### Summary of the invention

It is therefore desirable to provide an improved method and system for providing local or remote services in a client and server system.

The invention as recited in the independent claims allows to choose between local or remote processing of a data file in a client and server system, e.g. by allowing a user to specify whether a local handling of a data file in providing a service is desired or whether the data file should be handled remotely at the server.

By giving a user the option to choose between local or remote processing of a data file at a client unit or server unit the provision of a service or operation may be optimized as individually the best location for providing the service or operation may be chosen.

A client unit for local or remote processing of a data file in a client and server system comprises: a client data processing unit to execute a client application program for an operation on the data file; a communication means to communicate with a server unit, the server unit including a server application program for the operation on the data file; and a client selection means to select one of the client application program and the server application program for performing the operation on the data file.

The client unit may advantageously comprise means to detect whether the client application program is available at the client unit and the server application program is available at the server unit to avoid attempting a service without the necessary resources.

The client unit may further comprise means to transmit to the server unit, if the server application program is selected, an identifier of the server application program and control information for controlling the operation, and to receive a result of the operation from the server unit.

The client unit may include at least one of means to retrieve the data file, in case the client application program is selected; and means to effect transmission of the data file to the server unit, in case the server application program is selected.

The client selection means may be adapted to receive an instruction to switch between the client application program and the server application program during performing the operation and may be adapted to provide at least one selection field on a client display unit and to receive a user input corresponding to a selection of one of the client application program and the server application program.

The selection of the client unit and the server unit may be effected upon starting the desired operation on the data file. Further, a pre-selection of one of the client unit or server unit at an arbitrary point in time is possible,
wherein the pre-selection is one of the group consisting of:
a global pre-selection for all data files and operations; a pre-selection for a specific operation; a pre-selection for a specific data file; and a pre-selection for a specific operation in combination with a specific data file.

The at least one selection field may be part of a menu of a user interface at the client unit.

Moreover, the client application program may include a first client module and a second client module for a first sub-operation; the server application program may include a first server module and a second server module for a second sub-operation; wherein the operation may include the first and second sub-operation; and the client selection means may be adapted to select - one of the first client module and the first server module to perform the first sub-operation; and - one of the second client module the second server module to perform the second sub-operation.

The client communication means may be adapted to at least one of transmit and receive instructions corresponding to the execution of the first or second module.

A server unit for local or remote processing of a data file in a client and server system, adapted to cooperate with the above client unit comprises: a server data processing unit to execute a server application program for an operation on the data file; a server communication means to communicate with the client unit, the client unit including a client application program for performing an operation on the data file and to transmit a result of the operation to the client unit; and wherein the server data processing unit is adapted to receive from the client unit information on a selection of the server application program for performing the operation and to transmit a result of the operation to the client unit.

The server unit may include means to receive from the client unit an identifier of the server application program and control information for controlling the operation, in case the server application program is selected.

Further, means may be provided to retrieve the data file, in case the server application program is selected; and to effect transmission of the data file to the client unit, in case the client application program is selected.

The server communication means may be adapted to receive information from the client unit to switch between the client application program and the server application program during performing the operation.

The server application program may include a first server module and a second server module for a second sub-operation; the client application program may include a first client module and a second client module for a first sub-operation; wherein the operation may include the first and second sub-operation; and the server communication means may be adapted to receive information on a selection of - one of the first client module and the first server module to perform the first sub-operation; and - one of the second client module the second server module to perform the second sub-operation.

The server communication means may be adapted to at least one of transmit and receive instructions corresponding to the execution of the first or second module.

The operation or service performed in connection with the data file may include at least one of: - visualizing the data file at the client unit including rendering; - editing the data file; and - performing mathematical or logical operations on contents of the data file.

A system for local or remote processing of a data file may include the above described client unit server unit.

Further advantageous features of the invention are outlined in further dependent claims.

### Brief Description of the Figures:

- Fig. 1: illustrates elements of a system for local or remote processing of a data file according to an embodiment of the invention;
- Fig. 2: shows operations of a method for local or remote processing of a data file according to an embodiment of the invention;
- Fig. 3: illustrates operations of a method for local or remote processing of a data file according to another embodiment of the invention;
- Fig. 4: illustrates operations of a method for providing local or remote processing at a client unit and a server unit according to another embodiment of the invention;
- Fig. 5: illustrates operations of a method for providing local or remote processing including pre-selecting one of the client unit and server unit according to another embodiment of the invention;
- Fig. 6: shows operations of a method for providing local or remote processing including for switching between local or remote processing according to another embodiment of the invention;
- Fig. 7: shows elements of application programs for providing sub-operations for local or remote processing according to another embodiment of the invention.
- Fig. 8: illustrates operations of a method for providing sub-operations for local or remote processing according to another embodiment of the invention; and
- Fig. 9: illustrates operations of a method for providing sub-operations for local or remote processing at a client unit and a server unit according to another embodiment of the invention.

### Detailed Description of the Preferred Embodiments

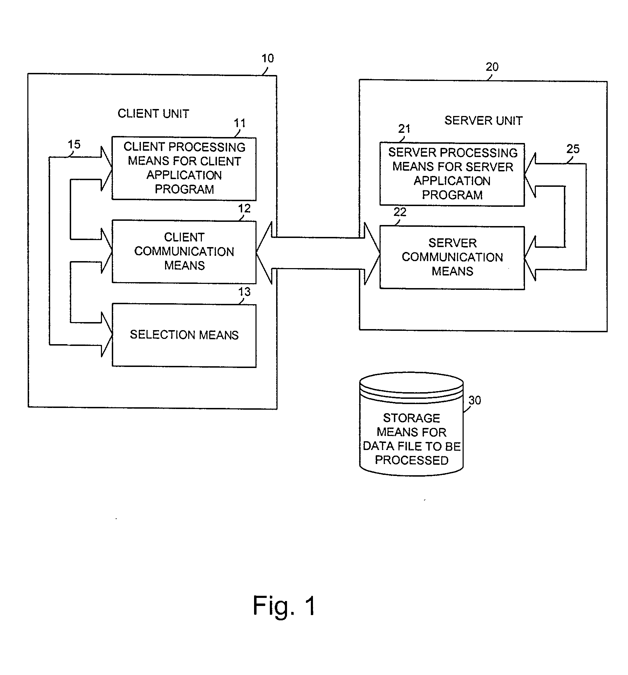

A first embodiment of the invention will be described with respect to Fig. 1, illustrating a system for local or remote processing of a data file in a client and server system.

Fig. 1 shows a client unit 10, including a client data processing means 11 for executing a client application program, a client communication means 12 and a selection means 13. Further, Fig. 1 shows a server unit 20, including a server data processing means 21 for executing a server application program and a server communication means 22 for communicating with the client communication means 12 over a communication link, as indicated by a double arrow 40.

Still further, Fig. 1 shows storage means 30 for storing data files to be operated on, such as text files, data files, image, audio or video files and similar. It is noted that the storage means 30 is optional, data may also be received via, e.g. a network and directly processed.

In an embodiment a client unit for local or remote processing of a data file in a client and server system, may comprise a client data processing unit to execute a client application program for an operation on the data file; a communication means to communicate with a server unit, the server unit including a server application program for the operation on the data file; and a client selection means to select one of the client application program and the server application program for performing the operation on the data file.

A server unit for local or remote processing of a data file in a client and server system, adapted to cooperate with the client unit of one of the claims 1-10, may comprise a server data processing unit to execute a server application program for an operation on the data file; a server communication means to communicate with the client unit, the client unit including a client application program for performing an operation on the data file and to transmit a result of the operation to the client unit; and wherein the server data processing unit is adapted to receive from the client unit information on a selection of the server application program for performing the operation and to transmit a result of the operation to the client unit.

Local or remote processing of a data file in a client and server system may be provided by performing at a client unit: selecting one of a client application program and a server application program for an operation on the data file; retrieving the data file at the client unit, in case the client application program is selected and performing the operation on the data file; and transmitting information on a selection of the server application program to the server unit and receiving information on results of the operation, in case the server application program is selected for performing the operation.

Correspondingly, local or remote processing of a data file in a client and server system may be provided by performing at a server unit: receiving information on a selection of a server application program at a server unit, if in a selection operation at a client unit a server application program is selected from one of a client application program and the server application program for performing an operation; retrieving the data file at the server unit and performing the operation on the data file; and transmitting a result of the operation to the client unit.

The client application program and the server application program may provide a desired operation or service on a data file such as editing, rendering, mathematical operations and similar. A plurality of client application programs and the server application programs may be provided. A client application program and a corresponding server application program provide the same service, i.e. perform the same operation on a data file, at least from the view point of a user operating the client unit. If for example the service/operation is editing a data file, both application programs will provide the necessary resources to edit the data file, e.g. including visualizing the data file at the client unit. However, processing operations internal to the client unit and the server unit may differ.
The system shown in Fig. 1 allows a client operating the client unit to choose between the client unit and the server unit for performing a desired operation or service on the data file.

If for example a large data file available at the server unit needs to be handled, it may be advantageous to select the server application program, i.e. the server unit, for performing the desired operation. In this case it can be avoided to initiate a time consuming transfer of the data file to the client unit.

On the other hand, in case for example a large number of user interactions is necessary in an operation on a data file, such as in editing the data file, it may be desired to edit the data file at the client unit. This allows to avoid, e.g., a frequent transmission of keyboard inputs at the client unit to the server unit and a frequent transmission display contents for visualization at the client unit.

In the following, the elements of the system for local and remote processing of a data file will be outlined in further detail.

The client unit 10 shown in Fig. 1 may be a general purpose data processing device, such as a personal computer, a mobile terminal such as a mobile computing device, a mobile phone or a mobile data organizer operated by a user wishing to access a service remote from the client unit 10, e.g. at the server unit 20. Even though only a single client unit 10 is illustrated in Fig. 1, it is understood that the shown embodiment may include a plurality of similar client units connected to the server unit 20.

The client data processing means 11 to execute a client application program for providing a particular service to a user, i.e. a predetermined operation on a data file, may be a central data processing unit of the client unit 10 or may be a data processing unit external to the client unit 10.

The client data processing means 11 may have access to a program storage means (not shown) for storing at least one sequence of code instructions constituting an application program or modules thereof for performing a predetermined operation on a data file. The program storage means may be located within the client unit 10 or external thereto.

An application program may be constituted by a separate program code for performing a desired operation or service or may be constituted by a module of a larger program structure for providing the service. Likewise, an application program may include a plurality of modules performing sub-operations of a service.

It is understood that the client data processing means 11 may be adapted to access and/or execute a plurality of application programs corresponding to a plurality of services/operations to be performed in connection with at least one data file.

An operation or service may for example be the editing of data files, rendering of data files such as web pages, may correspond to mathematical or logical operations on contents of the data file, e.g. in home banking applications, spread sheet applications, drawing applications, e-mail applications and similar. The operation may also relate to visualizing a data file, such as a text document, image file, video data or may relate to playing back audio or audio visual information.

The client communication means 12 of the client unit 10 for communicating with the server unit 20, e.g. via a network or a dedicated communication link, may be an adapter unit capable to execute various communication protocols in order to establish and maintain a communication with the server unit 20. The client communication means 12 may be constituted by a specialized piece of hardware or may be realized by a general data processing unit executing corresponding program instructions. It is also possible that the client communication means 12 is at least partially included in the client data processing means executing corresponding program instructions.

The client communication means 12 may communicate over a communication link using a communication end point specified by an address and a port number. The communication link may be a dedicated communication link such as a mobile communication link or a switched circuit communication link. Further, the communication link may involve a network of data processing devices such as a local area network or a wide area network or combinations thereof.

The selection means 13 for receiving a user selection instruction may be any means allowing to receive a user input in connection with a selection of the client application program or the server application program for performing the desired operation on the data file. For example, the selection means may be constituted by a selection field displayed on display means of the client unit (not shown), for receiving a selection input of a user, indicating a selection of the client unit or server unit for performing the desired operation. For example, the client selection means may be included in a roll-down window of an interface provided at the client unit. The selection means may be constituted by a dedicated piece of hardware or its functions may be executed by code instructions executed on the client data processing means, involving for example a display unit for displaying a selection window and a keyboard for entering a selection.

The client data processing means 11, the client communication means 12 and the selection means 13 are shown connected by a connection link 15, which may be a communication bus internal to the client unit, may include an adapter to a keyboard or may include external connections.

In the following, the server unit 20 will be described in further detail.

The server unit 20 may be a general purpose data processing unit, preferably a data processing unit with large resources, e.g. high processing capabilities and a large memory for storing large amounts of data. The server unit 20 may be a single unit or may be a distributed system of a plurality of servers or data processing units and may be shared by multiple users.

The server unit 20 includes server data processing means 21 for performing at least one server application program for a desired operation on a data file, and required in serving a request from the client unit. Similar to the client data processing means, the server data processing means 21 may be constituted by a central processing unit of the server unit 20, but may also be constituted by a distributed central processing unit including a plurality of individual processors on one or a plurality of machines. The server data processing means 21 may have access to storage means for storing preferably a large number of application programs for providing various services to users, i.e. for performing various operations on data files as desired by the users operating client units such as the client unit 10.

As before described with respect to the client unit 10, a server application program may relate to visualizing information such as a text document, image information or video information, may relate to playing back audio information. Further, an application program may relate to editing a data file and to performing mathematical or logical or rendering operations on data files, such as in the process of presenting web pages, in spread sheet applications and similar.

The invention is based on the concept that a particular operation or service may be performed either at the client unit 10 and the server unit 20. Therefore, at each of the client unit 10 and the server unit 20 corresponding application programs for a desired operation/service are available. Even though such a pair of corresponding application programs at the client unit 10 and the server unit 20, respectively, perform the same operations from the viewpoint of the user, they may execute slightly different operations internal to the systems. For example, an application program for visualizing a data file at the client unit may include preparing a data file for visualization at a display at the client unit, whereas an application program at the server unit 20 for visualization may include preparing display contents for transfer to the client unit 10.

Further, the server unit 20 includes server communication means 22 which may correspond to the client communication means 12. However, the server communication means may preferably be adapted to communicate with a plurality of client units such as the client unit 10, i.e., to maintain communication links to a plurality of client units.

The server data processing means 21 and the server communication means 22 of the server unit 20 are shown connected by a double arrow 25, which may be constituted by a system bus or similar, or by external connections, if the server unit 20 is constituted by a distributed system including distributed server data processing means and/or distributed server communication means.

Fig. 1 further shows storage means 30 for storing at least one data file to be operated on in providing a particular service for a user. The data storage means 30 may for example be a database, including a distributed database for example connected via a network. The storage means 30 may be connected to the server unit 20 and/or the client unit 10 either directly or through a communication network such as a local area network or a wide area network.

In the following the operation of the system shown in Fig. 1 will be outlined.

The system according to Fig. 1 for example allows to select local or remote processing of a data file, i.e. a user operating the client unit 10 may select either the client unit 10 or the server unit 20 for performing a specific operation on a data file, or a plurality of operations on at least one data file.

In the present embodiment it is assumed that a client application program for performing the specific at least one operation is available at the client unit 10 and a server application program for performing the at least one specific operation is available at the server unit 20.

The server unit 10 provides means allowing the user to select one of the client application program and the server application program for performing the at least one operation on the at least one data file. In case the client application program is selected by the user the client unit 10 may retrieve the at least one data file, e.g. from the storage means 30 and may perform the at least one operation on the at least one retrieved data file, e.g. rendering operations, visualization operations, editing operations, mathematical or logical operations and similar.

If in the selection operation at the client unit the user selected the server application program for performing the at least one operation on the at least one data file, information on the selection of the server application program such as an identifier of the desired operation or the server application program is transmitted to the server unit. Further, information on the at least one data file or the data files itself may be transmitted to the server unit. Thus, the server unit may be instructed to perform the at least one operation on the at least one data file

The server unit may retrieve the at least one data file from e.g. the storage means 30 or the client unit 10, perform the at least one operation and may then return information on results of the at least one operation to the client unit, e.g. for local visualization of results at the client unit or local storage at the client unit.

The process of performing the at least one operation at the server unit 20 may be controlled by the user via input of commands at the client unit 10, e.g. through an interface, e.g. a menu displayed at a display unit of the client unit or via command inputs through a keyboard or similar. The commands may then be transmitted to the server unit to control. An interactive execution of the desired operation is possible.

The invention, in allowing a user to select a service to be provided either at the client unit 10 or the server unit 20, allows an optimized provision of services, as the user may select the client unit in case an improved performance is expected involving the client unit and may select the server unit, in case an improved performance in executing the service is to be expected when selecting the server unit.

It is noted that the above described features and processing operations may realized by dedicated hardware or may be realized as programs including code instructions executed on data processing units. It is further possible that parts of the above sequence of operations is carried out in hardware, whereas other of the above processing operations are carried out using software.

It is further noted that a computer readable medium may be provided, having a program recorded thereon, where the program is to make a computer or system of data processing devices execute functions of the above described operations, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

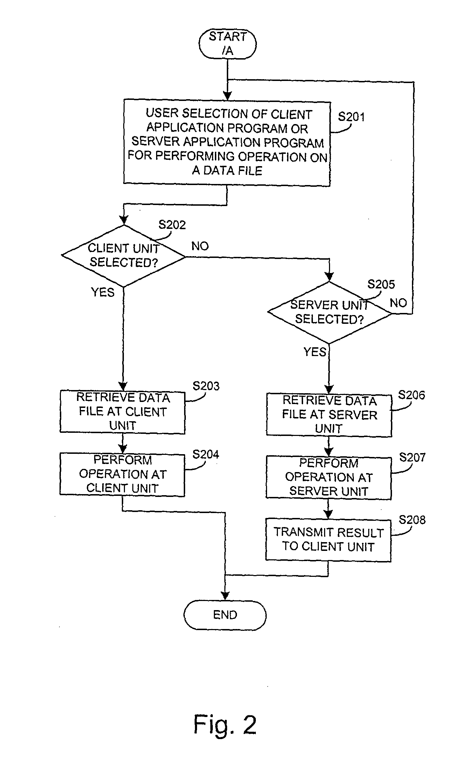

In the following, a further embodiment of the invention will be described with respect to Fig. 2.

Fig. 2 shows a sequence of operations of a method for local or remote provision of services according to another embodiment of the invention allowing a user operating a client unit to select one of the client unit and a server unit for an operation on a data file, i.e. the user may select one of a client application program and a corresponding server application program for performing an operation on a data file. The operations illustrated in Fig. 2 may be executed at the system described with respect to Fig. 1, however, Fig. 2 is not limited thereto.

In a operation S201 a selection instruction is received, e.g. at the client unit 10 shown in Fig. 1. The selection instruction preferably identifies one of the client application program and the server application program for performing a desired operation a data file. For example, the user selection could involve selecting the client unit or the server unit for rendering a document, for editing a document, operations prior to a visualization of a document and similar.

The user selection may typically be subsequent to a operation requesting a specific operation on a data file, e.g at the client unit, for example by specifying a data file name and an application identifier for specifying the operation to be performed on the data file. This may be achieved by entering a corresponding instruction using a keyboard or by clicking on an icon on a display using a mouse and cursor.

In a operation S202 it is determined, e.g. at the client unit 10, whether the client unit is selected for executing the specific operation on the data file, and in case the decision is "YES", in a operation S203 the client unit proceeds to retrieve the data file. Retrieving the data file may include loading the data file from a local storage means to the client data processing unit or may include retrieving the data file from the outside, e.g. from the storage means 30 shown in Fig. 1 or from other devices accessible from the client unit, such as another data processing unit or similar.

Subsequently, the specific operation or service is performed at the client unit in a operation S204 by the client application program selected in the selection step S201. Thereafter the flow ends.

If in step S202 the decision is "NO", it is determined in an operation S205, e.g. at the client unit, whether the server unit is selected for performing the operation, i.e. the server application program is selected in the selection step S201. In case in step S205 the decision is "NO", the flow returns to step S201, again expecting a user selection. If in step S205 the decision is "YES", the data file may be retrieved at the server unit in an operation S206. Since the step S205 may be performed at the client unit, prior to step S206 information may be transmitted to the server unit specifying the server application program and preferably specifying the data file to be operated on, instructing the server unit to retrieve and process the data file. Thus, the client unit may transmit to the server unit an identifier of the server application program and of the data file, or may transmit the data file itself, if the data file is maintained at the client unit.

Further, the client unit may transfer control information for controlling execution of the server application program, however, it is also possible that such control information is transmitted at a later point in time (e.g. step S207 described below). Step S206 may include loading the data file from a local memory accessible by the server unit or may include retrieving the data file from other components of the system, such as the database 30 other server units, e.g. connected by a local area network, or may also include retrieving the data file from the client unit.

Subsequently, in an operation S207 the server application program is executed for performing the operation on the data file, as described before. Executing the server application program for providing the operation/service may include receiving commands controlling the execution of the application, e.g. receiving commands from the client unit in an interactive session.

In an operation S208 any processing result, i.e., information resulting from performing the operation on the data file may be transmitted to the client unit, e.g. for local storage at the client unit or for local visualization at the client unit. It is also possible that the processing result is further processed by the client unit. The information transmitted in step S208 may include frames for display at the client unit or may include information on calculation results or information which needs to be further processed at the client unit before storage or local visualization. After step S208 the flow ends.

It is noted that even though the server application program and the client application program may perform essentially the same operation from the viewpoint of the user, the server application program and the client application program may differ in structure. For example, in case an editing operation is selected, the server application program will include receiving editing commands from the client and transmitting editing results back to the client whereas the client application program will include local editing functions of a data file.

The embodiment described with respect to Fig. 2 allows a user operating a client unit to select a server application for performing a specific operation over a plurality of specific operations on one or a plurality of data files.

Thus, the user may optimize the performance of the service or operation to be carried out, as depending on conditions as outlined before a local or remote processing of a data file may be selected.

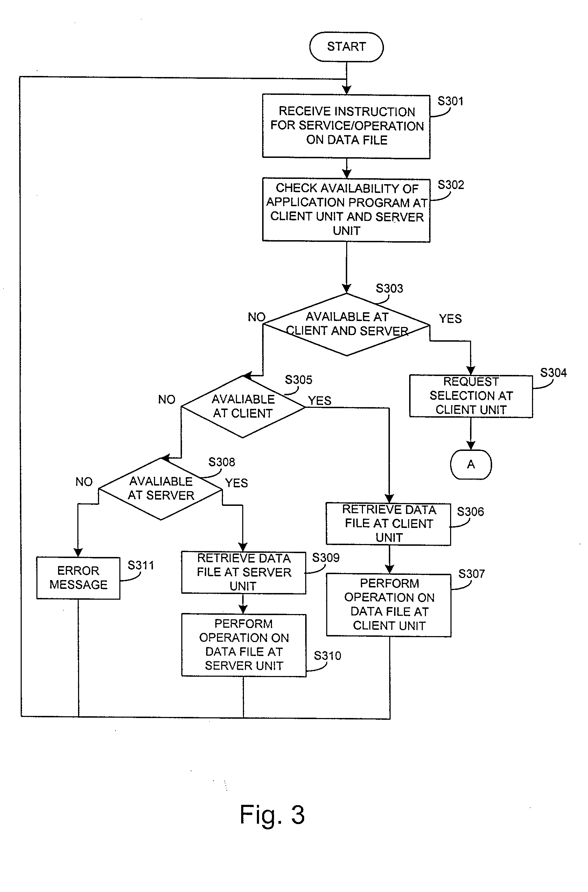

In the following, a further embodiment of the invention will be described with respect to Fig. 3.

Fig. 3 illustrates a sequence of steps of a method for providing local or remote service according to another embodiment of the invention. The steps illustrated in Fig. 3 may be performed by the system shown in Fig. 1, however, Fig. 3 is not limited thereto.

Initially, in an operation S301 at the client unit an instruction for a predetermined operation on a data file is received. The instruction could be generated upon user selection of a data file and a corresponding service such as editing or similar. For example, a data file and a service could be selected by clicking once or twice onto an icon representing a data file and a specific connected service on a display at the client unit. For example, a data file could be associated with a specific application, such as an application for displaying or editing the data file, and the data file and the corresponding application, i.e. operation or service, could be selected simultaneously.

However, it is also possible that the data file and the service or operation are selected separately, for example by selection on a display at the client unit or by input of instructions on a command line using a keyboard.

Subsequently, in an operation S302 it may be checked at the client unit whether a corresponding client application program for performing the selected service or operation is available at the client unit.

Further, it could be determined whether a corresponding server application program for performing the selected operation is available at the server unit. This step is optional, if all application programs for performing all services or operations are available at the server unit. Determining the availability of the server application program may involve a communication between the client unit and the server unit for transmitting a corresponding request to the server unit and returning a notification to the client unit indicating whether the server application program is available or not.

Subsequently, in an operation S303 it is decided whether the operation can be performed at the client unit and the server unit, i.e. whether the server application program is available at the server unit and the client application program is available at the client unit. In case in step S303 the decision is "YES", in an operation S304 the user of the client unit may be requested to select either the client unit or the server unit for performing the operation on the data file, i.e., to select the client application program or the server application program. The client selection means may provide at least one selection field on a client display unit for receiving a selection input corresponding to a selection of one of the client application program and the server application program. The selection field may be part of a menu of a user interface at the client unit and the selection may be input via a keyboard or via a selection using a curser on a display of the client unit. It is also possible that the selection field may be opened in a roll down menu on an interface for receiving user commands at the client unit.

Further, means may be provided at the client unit receiving a pre-selection of either the client unit or the server unit for performing all operations on data files or, such a selection could be entered individually for each provided service or operation. The pre-selection of the client unit or server unit may be performed for example upon logging onto the system, i.e., in case the user operating the client unit connects to the server unit, or may be pre-selected at any other point in time including during a time where the client unit is offline, i.e. not connected to the server unit. Thus, if a pre-selection was carried out for one or all services available, step S304 may include determining which pre-selection was carried out by a user (or an operator operating the system) in connection with the requested operation on the data file.

Thereafter the flow may continue at an entry point A shown in Fig. 2, i.e., the flow may proceed to step S201 of Fig. 2.

In case in step S303 the decision is "NO", it is decided in step S305 whether the client application program is available at the client unit. If the decision is "YES", in an operation S306 the data file is retrieved at the client unit, e.g. as it was previously outlined with respect to Fig. 2. It is noted that the data file may be retrieved either locally or may be retrieved from any other location including the server unit.

In an operation S307 the selected client application program is executed, and the operation is performed, e.g. under control of a user operating the client unit, as outlined before.

In case in step S305 the decision is "NO", in an operation S308 it is determined whether the server application program is available at the server unit and in case the decision is "YES", in an operation S309 the data file is retrieved at the server unit, e.g. as it was outlined with respect to Fig. 2. Thereafter the selected server application program is executed for performing the desired operation on the data file at the server unit, as outlined before, which may include receiving control instructions from the client unit.

If in step S308 the decision is "NO", indicating that neither the client application program is available at the client unit nor the server application program is available at the server unit, in an operation S311 an error message is presented to the user, e.g. indicating that the selected operation or service is not available.

After steps S307, S310 and S311 the flow return to step S301, i.e., a next user instruction for the same or another predetermined operation on the same or another data file is expected.

It is noted that some of the steps shown in Fig. 3 are optional, for example steps S308-S311 need not be performed in case it is assumed that the server application program for providing a particular operation or service is always available at the server unit.

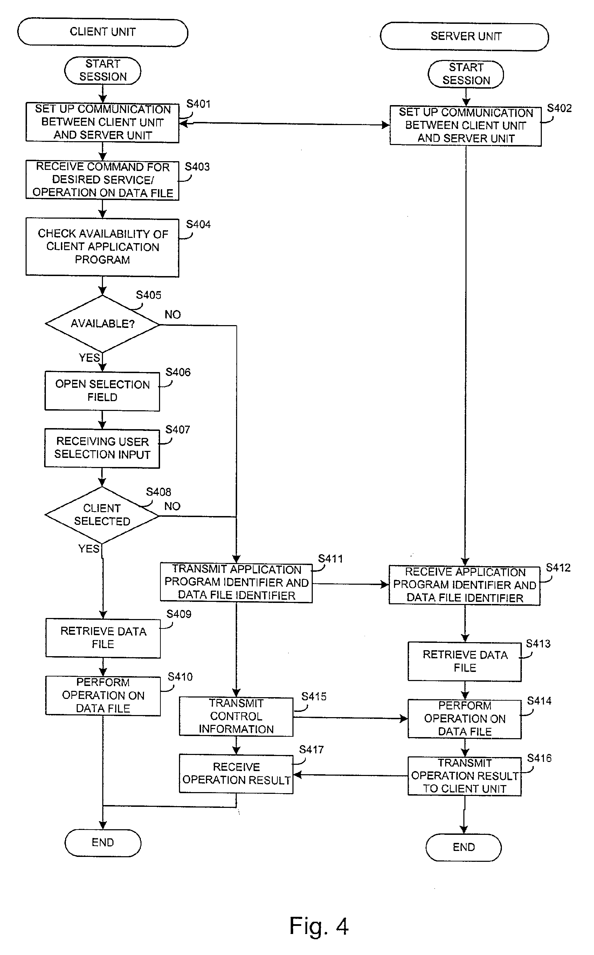

In the following a further embodiment of the invention will be described with respect to Fig. 4.

Fig. 4 illustrates steps of a method for providing local or remote service in a client and server system according to another embodiment of the invention. Fig. 4 particularly illustrates steps performed at the client unit and at the server unit and communications between the units. The steps illustrated in Fig. 4 may be performed by the system shown in Fig. 1, however, Fig. 4 is not limited thereto.

Fig. 4 illustrates on the left side steps performed at the client unit and illustrates on the right side steps performed at the server unit in providing local or remote service to a user.

In steps S401 and S402, starting an access session, a communication between the client unit and the server unit is established. This may involve logging onto the server unit from the client unit using known techniques, e.g. involving a dedicated communication link or a network such as the Internet.

Then, in an operation S403 at the client unit, a command for a service is received, i.e. a command instructing a specific operation on a data file, e.g. similar to step S301 outlined with respect to Fig. 3.

In an operation S404 it is determined, whether the client application program is available at the client unit, for example as outlined before with respect to Fig. 3. In an operation S405 it is decided whether the client application program is available at the client unit and if the decision is "YES", in an operation S406 a selection field may be presented to the user and a selection input may be received in an operation S407 as outlined for example with respect to step S304 of Fig. 3.

Thereafter, it is determined in step S408 whether the client unit is selected. In case the decision in step S408 is "YES", in an operation S409 the data file is retrieved at the client unit, for example as it was outlined before. Subsequently, in an operation S410 the client application program is executed for performing the desired operation on the data file, e.g. as outlined before. Thereafter the flow ends.

If in step S408 the decision is "NO", in an operation S411 information on the requested operation or service and on the selected data file is transmitted to the server unit. This may involve transmitting an application program identifier and an identifier of the data file through the communication link between the client unit and server unit set up in steps S401 and S402. It may also involve transmitting at least parts of the data file to the server unit.

In an operation S412 at the server unit the information of step S411 is received, instructing the server unit to perform the operation on the data file.

In an operation S413 at the server unit the data file is retrieved, for example as outlined before, and in an operation S414 the server application program is executed for performing the desired operation or service on the data file. This may include receiving control information for controlling the operation from the client unit, as illustrated by an optional step S415.

Finally, in an operation S416 a result of the operation may be transmitted back to the client unit for local visualization at the client unit in an operation S417, as for example outlined before.

It is noted that the above steps may at least partially be performed in hardware or software.

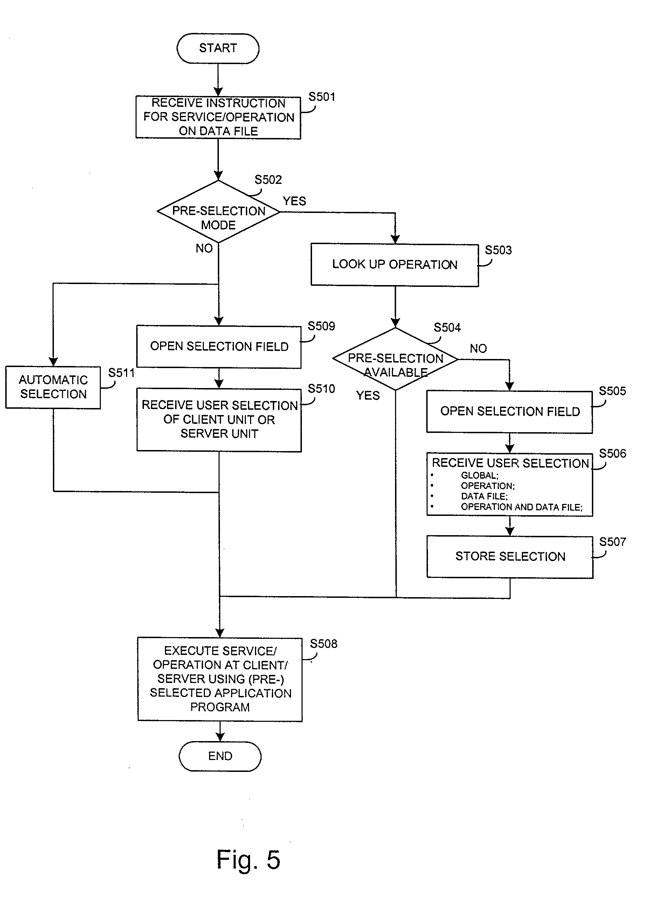

In the following a further embodiment of the invention will be described with respect to Fig. 5.

Fig. 5 shows a sequence of steps of the method for providing local or remote service according to another embodiment of the invention, particularly including options for a pre-selection of one of the client unit and the server unit for performing an operation on a data file. The steps illustrated in Fig. 5 may be executed by the system shown in Fig. 1, however, Fig. 5 is not limited thereto.

In a first step S501 an instruction for a service or operation on a data file is received, preferably at the client unit, such as the client unit 10 of Fig. 1. Step S501 may be similar to step S301 described with respect to Fig. 3. At this point it is assumed that a communication link between the client unit and a server unit was already established and further, it is assumed that a client application program for performing the desired operation is available at the client unit, and further it is assumed that a server application program for performing the desired operation is available at the server unit.

In an operation S502 it is determined whether a pre-selection mode is set, for example at the client unit, indicating a user preference for local service or remote service, i.e. for performing the operation on the data file at the client unit or at the server unit. The pre-selection mode may also be set by other entities of the system such as the server unit.

If in step S502 the decision is "YES", in an operation S503 a lookup operation is performed, for example at the client unit, in order to determine whether a pre-selection of the client unit or the server unit for the desired operation on the data file has previously been set, for example in a memory accessible by the client unit. The lookup operation may include transferring information on the operation and/or the data file to a remotely executed process determining whether in a memory a pre-selection in correspondence to the transmitted information is available. Pre-selection information may be maintained at the client unit, at the server unit or any other location.

In step S504 it is determined whether a pre-selection of the client unit or server unit is available, i.e. whether the user has pre-selected the server application program or the client application program for performing the desired operation on the data file. If in step S504 the decision is "NO", in an operation S505 a selection field may be presented to a user at the client unit, for example as outlined with respect to previous embodiments. However, it is also possible that the user is prompted by other means to input a selection instruction.

In an operation S506 a user selection is received, indicating a selection of the server application program at the server unit or the client application program at the client unit for performing the desired operation on the data file.

In step S506 the user may be allowed to choose between a plurality of different pre-selection options reflecting user preferences as to how a pre-selection should be handled. The pre-selection may be handled globally, in connection with an operation or service, in connection with a particular data file or in connection with a data file associated with an operation.

Specifically, as a first option, a pre-selection may be global, i.e. the user may select the client unit or server unit for all operations carried out, e.g. during a session, provided that for an operation a server application program and a client application program are available. According to the first option any operation will be carried out at the unit specified in the global pre-selection.

As a second option the user may specify a pre-selection depending on a specific operation or service, i.e. may pre-select the client unit or server unit for carrying out a corresponding client application program or server application program. Thus, according to the second option a corresponding operation or service will on any specified data file be carried out at the client unit or server unit. The second pre-selection option may be advantageous for example in situations where a specific operation usually has improved performance characteristics at the client unit or server unit. In this case a corresponding pre-selection of the client unit or server unit may improve for example latency. For example, an operation corresponding to editing a document may advantageously be carried out locally at the client unit, whereas an operation such as rendering a web page or video data may be advantageously carried out at the server unit, due to higher processing resources.

According to a third option the user may specify a pre-selection in connection with the selected specific data file, i.e. may pre-select the client unit or server unit for performing any operation on the data file. This option may for example be advantageous if the data file is locally available at the client unit or stored at the server unit. A pre-selection may also specified for groups of data files, such as for all text documents, image files etc., or subgroups thereof.

As a fourth option the user may specify a pre-selection in connection with the desired operation and the selected data file, indicating that the client unit or the server unit is to be selected in case a specific operation is performed on a specific data file.

The pre-selections according to the first to fourth option may be stored in a memory either as outlined above, during operation, or may be stored in a memory at another arbitrary point in time, including times where the client unit is off-line, i.e. not connected to the server unit.

Storing the pre-selection information is performed in step S507. The pre-selection information may be stored in a memory at the client unit, at the server unit or at any other location, for example in a network of data processing devices and the pre-selections may be retrieved as outlined in step S503 from the respective storage location.

Thereafter in step S508 the operation or service on the data file is executed according to the specified selection, i.e. at the client unit or server unit using the respective application program, for example as outlined with respect to previous embodiments.

If in step S504 the decision is "YES", i.e. a pre-selection is available for the operation on the data file, the flow directly proceeds to step S508 and the operation is performed at the pre-selected location, i.e. at the client unit or server unit using the respective application program.

If in step S502 the decision is "NO", i.e. the pre-selection mode is not set, in an operation S509 a selection field is presented to the user, e.g. on a client display unit as outlined with respect to previous embodiments. However, it is noted that the user may be prompted to input a selection by any other means, including using audio information.

Thereafter, in step S510 a user selection of the client unit or the server unit is received, i.e. the client selects either the client unit or server unit for performing the operation on the data file. Step S510 may be similar to the previous embodiments.

Thereafter the flow continues to step S508 and the operation is performed according to the selection, i.e. at the client unit or server unit.

Alternatively to steps S509 and S510 an automatic selection of the client unit or server unit may be performed, as indicated by an operation S511. In step S511 either the client unit or the server unit may be automatically selected for performing the desired operation on the data file. The automatic selection may follow certain parameters including at least
- a file size of the data file,
- a type of operation,
- performance characteristics of a communication link between the client unit and the server unit, and
- processing and/or storage resources at the client unit., and

For example, a selection of the server unit may be advantageous for a large data file, whereas for an operation or service requiring frequent user interaction and little processing capabilities, a selection of the client unit may be advantageous.

After optional step S511 the flow continues with step S508 and the service is performed according to the selection. After step S508 the flow ends or may return to step S501 for further operations.

The embodiment described with respect to Fig. 5 provides enhanced user flexibility in configuring an access session to a server unit by specifying pre-selection options of step S506 and by specifying the pre-selection mode. Further, increased convenience may be achieved by selecting an automatic selection of either the client unit or the server unit as indicated by step S511.

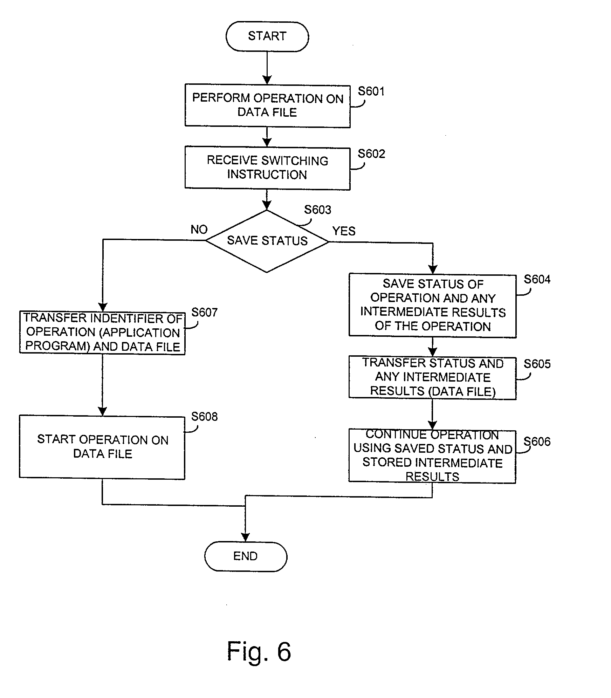

In the following a further embodiment of the invention is described with respect to Fig. 6.

Fig. 6 shows a sequence of steps performed in the method according to another embodiment of the invention. Fig. 6 particularly illustrates steps performed during switching the location of execution of the operation, i.e. switching between the client unit and the server unit during performing the operation. The steps of the present embodiment may be performed by the system shown in Fig. 1, however, Fig. 6 is not limited thereto.

In an operation S601 the desired operation, i.e. the desired service, is performed on the data file, as it was outlined with respect to previous embodiments. The operation may either be performed at the client unit or the server unit.

In an operation S602 a switching instruction is received, preferably at the client unit, instructing to switch the location of execution of the operation from the client unit to the server unit or vice versa. Corresponding information notifying the respective other unit on the switching instruction may be transmitted between the client unit and the server unit. The switching instruction may be input by a user, for example if an execution of the operation on the respective other unit appears advantageous.

However, it is also possible that the switching instruction is generated by the client unit or server unit upon determining that an execution of the operation on the respective other unit is advantageous, e.g. if it is determined that resources at the client unit are insufficient or if delays in connection with a transmission of information during an execution of the operation at the server unit are above a certain threshold.

Preferably, upon receiving a switching instruction the execution of the operation may be interrupted. Then, in an operation S603 the user may be requested to indicate whether the present status of the operation should be saved. If in step S603 the user instruction is "YES", in an operation S604 the status of the operation and/or any intermediate results of the operation may be stored, e.g. at the client unit or the server unit or in external storage means such as the storage device 30 shown in Fig. 1. Saving the status may include saving the exact conditions under which the operation was interrupted. Storing intermediate results of the operation may include intermediate calculation results or may include storing a modified version of the data file, modified during performing the operation before the switching instruction was received.

It is noted that the decision on storing may be also reached by the client unit or server unit without user action, e.g. upon determining that a reduced delay may be achieved with storing and discarding a status of the operation.

Thereafter, in an operation S605 the status and possibly any intermediate results, e.g. the modified data file, are transmitted between the units, i.e. from the client unit to the server unit or vice versa.

In an operation S606 the operation is then continued at the respective other unit using the saved status and the stored intermediate results, e.g. the modified data file.

If in operation S603 the decision is "NO", in an operation S607 the status and any intermediate results obtained during performing the operation prior to receiving the switching instruction may be discarded and an identifier of the operation, i.e. the application program and, if necessary, the data file may be transmitted to the respective other unit, similar to what was outlined with respect to previous embodiments.

Subsequently, in an operation S608 the operation will be newly started on the data file, without referring to any intermediate results of the operation achieved before receiving the switching instruction.

After operations S608 and S606 the flow ends.

The described embodiment advantageously allows to switch between the client unit and the server unit during performing the operation, i.e. during providing a particular service to the user. For example, in case the selected service is editing a document at the server unit and the latency is unacceptably high, using the switching instruction, the editing of the data file could be transferred from the server unit to the client unit in order to achieve reduced latency.

It is noted that repeated switching between the client unit and the server unit is possible.

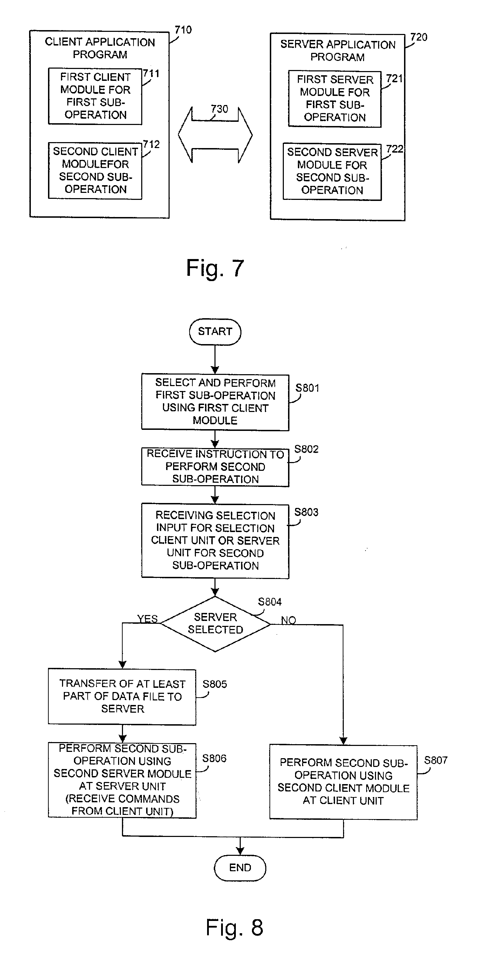

In the following a further embodiment of the invention will be described with respect to Fig. 7.

Fig. 7 schematically illustrates a client application program 710 including a first client module 711 for a first sub-operation and a second client module 712 for a second sub-operation. A server application program 720 includes a first server module 721 for the first sub-operation and a second server module 722 for the second sub-operation. A double arrow 730 illustrates a communication path through which the client unit and the server unit including client application program 710 and the server application program 720 may communicate.

According to the embodiment of Fig. 7 the client application program and server application program for performing the desired operation on a data file may be subdivided into at least one first and second module for performing at least a first and second sub-operation.

A client module may be a sequence of code instructions which may for example be executed at the client or server data processing unit shown in Fig. 1.

The first sub-operation and the second sub-operation together may make up the desired operation on the data file, for example preparing a data file for visualization, editing a data file or performing rendering or mathematical or logical operations on the data file.

For example, a sub-operation in editing a document could include operations for visualizing information and a second sub-operation could include a receiving of a user input for editing the data file.

In the case of a mathematical operation, a first sub-operation could include a set of mathematical instructions and a second sub-operation could include visualizing a result of the first sub-operation.

The sub-operations may be performed by the modules, dividing a desired operation or service, i.e. an application program into smaller logical entities.

The invention in the described embodiment allows a free selection of the client unit and the server unit for performing the first sub-operation and the second sub-operation. Therefore, while the first sub-operation may be executed at the client unit, the second sub-operation may be executed at the server unit and vice versa. Of course, it is also possible that both sub-operations are executed at either the client unit or the server unit.

For example, if the desired operation or service includes a spread sheet application, a first module could include preparing the data file for display including performing the mathematical operations of the spread sheet, whereas a second module could include functions for receiving a user input to be processed. Therefore, while the first module for the first sub-operation, potentially requiring large computational requirements, may be performed at a server unit, the client unit may be selected for the second module for the second sub-operation relating to receiving user input at selected locations of the spread sheet application. Accordingly, while a data file could be maintained at the server unit, a smaller part of the data file for editing, i.e. the part for receiving a user input, could be transmitted to the client unit.

Allowing a user to select the location of execution of modules of an application program for providing a specific service allows to further improve the performance of the system for providing remote or local service.

In the following a further embodiment of the invention will be described with respect to Fig. 8.

Fig. 8 shows a sequence of operations of a method for providing remote or local service with a first and second module according to another embodiment of the invention. The operations illustrated in Fig. 8 may be performed by the system shown in Fig. 1, the system of Fig. 1 including the client application program and the server application program described with respect to Fig. 7. However, Fig. 8 is not limited thereto.

In the present embodiment, for simplicity reasons, it is assumed that the first sub-operation is performed at the client unit using the first client module.

In a first operation S801 a first sub-operation using a first client module is selected and performed. The selection of operation S801 may be performed similar to the selection of the operation for providing an "entire" operation, described with respect to previous embodiments.

In an operation S802 an instruction for the second sub-operation is received. This instruction may be input by a user at the client unit, or may be generated during execution of the first sub-operation with the first client module.

For example, in case the desired operation on the data file includes a spread sheet application, the first sub-operation could include visualizing the data file locally at the client, and the second sub-operation could relate to performing a complex mathematical operation on contents of the data file, e.g. in correspondence to a user input during performing the spread sheet application.

In an operation S803 a selection input for selection of the client unit or server unit for the second sub-operation using the second client or server module is received. Step S803 may be similar to the previous embodiments, particularly, the selection step may include a selection as described with respect to Fig. 6, including an automatic selection in accordance with the parameters described.

In an operation S804 it is determined whether the server unit is selected for performing the second sub-operation and if the decision is "YES", in an operation S805 at least part of the data file is transferred to the server unit. This part preferably is only the part of the data file needed for performing the second sub-operation. Further, in step S805 an identifier of the second server module may be transmitted to the server unit. It is also possible that the entire data file is copied to the server unit.

Thereafter, the second sub-operation using the second server module is performed at the server unit, for example a mathematical operation may be performed, as outlined before. Executing the second sub-operation at the server unit may include receiving commands concerning the execution of the second sub-operation at the server unit.

Optionally, after completion of step S806 the first sub-operation may be continued, or the first sub-operation and the second sub-operation may be executed in parallel at the server unit and client unit.

In case in step S804 the decision is "NO", i.e. the client is selected, in an operation S807 the second sub-operation using the second client module is performed at the client unit, as outlined before. Thereafter the flow of steps ends.

Even though it is assumed in the present embodiment that the first sub-operation is executed at the client unit, in another embodiment it is equally possible to perform the first sub-operation at the server unit. In this case in steps S801-S807 "server" is to be replaced by "client" and vice versa.

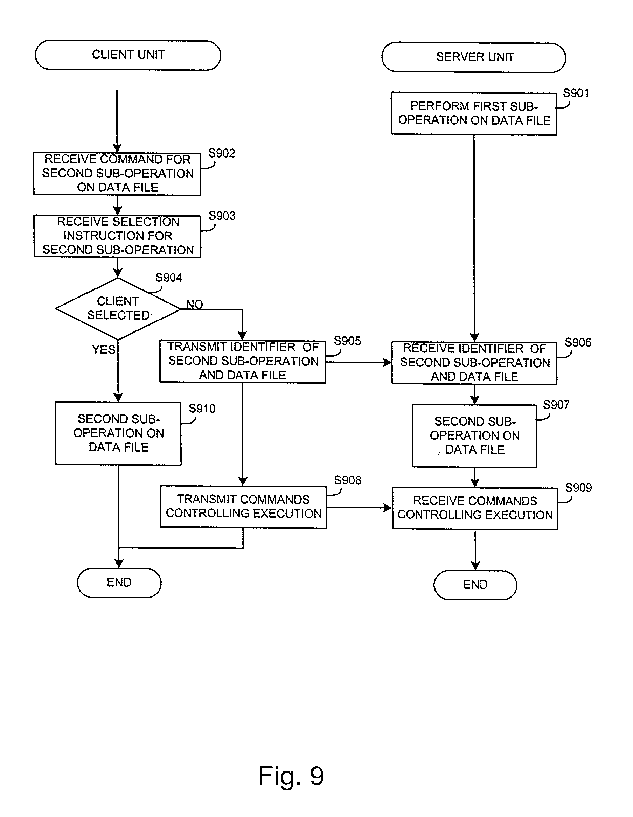

In the following a further embodiment of the invention will be described with respect to Fig. 9.

Fig. 9 shows a sequence of steps in providing local or remote service performed at the client unit and the server unit. The left side of Fig. 9 shows steps at the client unit and the right side of Fig. 8 illustrates steps at the server unit.

In the embodiment of Fig. 9, for simplicity reasons, it is initially assumed that the first sub-operation on the data file is performed at the server unit in an operation S901. The first sub-operation may be selected and performed as outlined with respect to previous embodiments, particularly embodiment of Fig. 7.

Then, at the client unit in an operation S902 a command for the second sub-operation on the data file is received, either input by a user or generated by the first sub-operation, e.g. as it was outlined with respect to Fig. 8.

In an operation S903 a selection instruction for the second sub-operation is input to the client unit, e.g. as it was outlined with respect to step S803.

In an operation S904 it is determined whether the client is selected and in case the decision is "NO", i.e. the server is selected, an identifier of the second sub-operation is transmitted to the server unit. Further, in step S905 at least part of the data file may be transmitted to the server unit, unless e.g. the data file is also available at the server unit.

In an operation S906 at the server unit the identifier and at least part of the data file are received and in an operation S907 the second sub-operation is performed. This may include receiving commands controlling the execution of the second sub-operation in an operation S909, transmitted from the client unit in an operation S908. The commands may input by a user.

If in step S904 the decision is "YES", indicating that the client is selected, in an operation S810 the second sub-operation is executed on the'data file at the client unit, e.g. as it was outlined before.

Even though it is assumed in the present embodiment that the first sub-operation is executed at the server unit, in another embodiment it is equally possible to perform the first sub-operation at the client unit.
In this case in step S909 receiving commands controlling the execution of the second sub-operation, transmitted from the client unit in an operation S908 may include commands input by a user or generated by the first client module.

While specific sequences of operations were described in connection with the above embodiments, it is noted that the above outlined sequences of operations may be varied.

Further, the features and processing steps of the above described embodiments may realized by dedicated hardware or may be realized as programs including code instructions executed on data processing units. It is further possible that parts of the above processing steps are carried out in hardware, whereas other processing steps of the above steps are carried out using software.

It is further noted that a computer readable medium may be provided, having a program recorded thereon, where the program is to make a computer or system of data processing devices execute functions of the above described steps of the individual embodiments, particularly of the client unit and/or the server unit. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

According to another embodiment a client unit may be constituted as follows:
1) A client unit for local or remote processing of a data file in a client and server system comprises:
   a code section containing instructions of a client application program for an operation on the data file;
   a code section containing instructions to communicate with a server unit, the server unit including a code section containing instructions of a server application program for the operation on the data file; and
   a code section containing instructions to select one of the client application program and the server application program for performing the operation on the data file.
2) Client unit of 1), comprising a code section containing instructions to detect whether the client application program is available at the client unit and the server application program is available at the server unit.
3) Client unit of 1), comprising a code section containing instructions to transmit to the server unit an identifier of the server application program and control information for controlling the operation, and to receive a result of the operation from the server unit, in case the server application program is selected.
4) Client unit of 1), including at least one of
   a code section containing instructions to retrieve the data file, in case the client application program is selected; and
   a code section containing instructions to effect transmission of the data file to the server unit, in case the server application program is selected.
5) Client unit of 1), including a code section containing instructions to receive an instruction to switch between the client application program and the server application program during performing the operation.
6) Client unit of 1), including a code section containing instructions to provide at least one selection field on a client display unit and to receive a user input corresponding to a selection of one of the client application program and the server application program.
7) Client unit of 1), including a code section containing instructions to receive a pre-selection instruction of one of the client unit or server unit at an arbitrary point in time, and wherein the pre-selection is one of the group consisting of:
   - a global pre-selection for all data files and operations;
   - a pre-selection for a specific operation;
   - a pre-selection for a specific data file; and
   - a pre-selection for a specific operation in combination with a specific data file.
8) Client unit of 6), wherein the at least one selection field is part of a menu of a user interface at the client unit.
9) Client unit of 1), wherein
   the client application program includes a first client module and a second client module for a first sub-operation;
   the server application program includes a first server module and a second server module for a second sub-operation;
   wherein the operation includes the first and second sub-operation; and
   including a code section containing instructions to select
   - one of the first client module and the first server module to perform the first sub-operation; and
   - one of the second client module the second server module to perform the second sub-operation.
10) Client unit of 1), including a code section containing instructions to at least one of transmit and receive instructions corresponding to the execution of the first or second module.
   According to another embodiment a server unit may be constituted as follows:
11) Server unit for local or remote processing of a data file in a client and server system, adapted to cooperate with the client unit of one of 1)-10) comprising:
   a code section containing instructions to execute a server application program for an operation on the data file;
   a code section containing instructions to communicate with the client unit, the client unit including a client application program for performing an operation on the data file and to transmit a result of the operation to the client unit; and
   a code section containing instructions to receive from the client unit information on a selection of the server application program for performing the operation and to transmit a result of the operation to the client unit.
12) Server unit of 11), including a code section containing instructions to receive from the client unit an identifier of the server application program and control information for controlling the operation, in case the server application program is selected.
13) Server unit of one of the claims 11 and 12) including at least one of
   - a code section containing instructions to retrieve the data file, in case the server application program is selected; and
   - a code section containing instructions to effect transmission of the data file to the client unit, in case the client application program is selected.
14) Server unit of 11), including a code section containing instructions to receive information from the client unit to switch between the client application program and the server application program during performing the operation.
15) Server unit of 11), wherein
   the server application program includes a first server module and a second server module for a second sub-operation;
   the client application program includes a first client module and a second client module for a first sub-operation;
   wherein the operation includes the first and second sub-operation; and
   including a code section containing instructions to receive information on a selection of
   - one of the first client module and the first server module to perform the first sub-operation; and
   - one of the second client module the second server module to perform the second sub-operation.
16) Server unit of 11), including a code section containing instructions to at least one of transmit and receive instructions corresponding to the execution of the first or second module.
17) Server unit of one of 1) and 11), wherein the operation includes at least one of:
   - visualizing the data file at the client unit including rendering;
   - editing the data file; and
   - performing mathematical or logical operations on contents of the data file.

## Claims

1. Client unit for local or remote processing of a data file in a client and server system, comprising:
a client data processing unit to execute a client application program for an operation on the data file;
a communication means to communicate with a server unit, the server unit including a server application program for the operation on the data file; and
a client selection means to select one of the client application program and the server application program for performing the operation on the data file.

2. Client unit of claim 1, comprising means to detect whether the client application program is available at the client unit and the server application program is available at the server unit.

3. Client unit of one of the preceding claims, comprising means to transmit to the server unit an identifier of the server application program and control information for controlling the operation, and to receive a result of the operation from the server unit, in case the server application program is selected.

4. Client unit of one of the preceding claims, including at least one of
- means to retrieve the data file, in case the client application program is selected; and
- means to effect transmission of the data file to the server unit, in case the server application program is selected.

5. Client unit of one of the preceding claims, wherein the client selection means is adapted to receive an instruction to switch between the client application program and the server application program during performing the operation.

6. Client unit of one of the preceding claims, wherein the client selection means is adapted to provide at least one selection field on a client display unit and to receive a user input corresponding to a selection of one of the client application program and the server application program.

7. Client unit of one of the preceding claims, wherein the client selection means is adapted to receive a pre-selection instruction of one of the client unit or server unit at an arbitrary point in time, and wherein the pre-selection is one of the group consisting of:
- a global pre-selection for all data files and operations;
- a pre-selection for a specific operation;
- a pre-selection for a specific data file; and
- a pre-selection for a specific operation in combination with a specific data file.

8. Client unit of one of the claims 6 and 7, wherein the at least one selection field is part of a menu of a user interface at the client unit.

9. Client unit of one of the preceding claims, wherein
the client application program includes a first client module and a second client module for a first sub-operation;
the server application program includes a first server module and a second server module for a second sub-operation;
wherein the operation includes the first and second sub-operation; and
the client selection means is adapted to select
- one of the first client module and the first server module to perform the first sub-operation; and
- one of the second client module the second server module to perform the second sub-operation.

10. Client unit of one of the preceding claims, wherein the client communication means is adapted to at least one of transmit and receive instructions corresponding to the execution of the first or second module.

11. Server unit for local or remote processing of a data file in a client and server system, adapted to cooperate with the client unit of one of the claims 1-10, comprising:
a server data processing unit to execute a server application program for an operation on the data file;
a server communication means to communicate with the client unit, the client unit including a client application program for performing an operation on the data file and to transmit a result of the operation to the client unit; and
wherein the server data processing unit is adapted to receive from the client unit information on a selection of the server application program for performing the operation and to transmit a result of the operation to the client unit.

12. Server unit of claim 11, including means to receive from the client unit an identifier of the server application program and control information for controlling the operation, in case the server application program is selected.

13. Server unit of one of the claims 11 and 12, including at least one of
- means to retrieve the data file, in case the server application program is selected; and
- means to effect transmission of the data file to the client unit, in case the client application program is selected.

14. Server unit of one of the claims 11 - 13, wherein the server communication means is adapted to receive information from the client unit to switch between the client application program and the server application program during performing the operation.

15. Server unit of one of the claims 11 - 14, wherein
the server application program includes a first server module and a second server module for a second sub-operation;
the client application program includes a first client module and a second client module for a first sub-operation;
wherein the operation includes the first and second sub-operation; and
the server communication means is adapted to receive information on a selection of
- one of the first client module and the first server module to perform the first sub-operation; and
- one of the second client module the second server module to perform the second sub-operation.

16. Server unit of one of the claims 11 - 15, wherein the server communication means is adapted to at least one of transmit and receive instructions corresponding to the execution of the first or second module.

17. Server unit of one of the preceding claims, wherein the operation includes at least one of:
- visualizing the data file at the client unit including rendering;
- editing the data file; and
- performing mathematical or logical operations on contents of the data file.

18. System for local or remote processing of a data file including the client unit of one of the claims 1-10 and the server unit of one of the claims 11-17.

19. Method for local or remote processing of a data file in a client and server system, comprising:
selecting one of a client application program and a server application program for an operation on the data file;
retrieving the data file at the client unit, in case the client application program is selected and performing the operation on the data file; and
transmitting information on a selection of the server application program to the server unit and receiving information on results of the operation, in case the server application program is selected for performing the operation.

20. Method of claim 19, comprising detecting whether the client application program is available at the client unit and the server application program is available at the server unit.

21. Method of one of the claims 19 and 20, comprising transmitting to the server unit an identifier of the server application program and control information for controlling the operation, in case the server application program is selected.

22. Method of one of the claims 19 - 21, comprising switching between the client application program and the server application program during performing the operation.

23. Method of one of the claims 19 - 22, comprising providing at least one selection field on a client display unit and receiving a user input corresponding to a selection of one of the client application program and server application program.

24. Method of one of the claims 19 - 23, including receiving information on a pre-selection of one of the client unit or server unit at an arbitrary point in time, wherein the pre-selection constitutes one of the group consisting of:
- a global pre-selection for all data files and operations;
- a pre-selection for a specific operation;
- a pre-selection for a specific data file; and
- a pre-selection for a specific operation in combination with a specific data file.

25. Method of one of the claims 23 and 24, wherein the at least one selection field is part of a menu of a user interface at the client unit.

26. Method of one of the claims 19 - 25, wherein
the client application program includes a first client module and a second client module for a first sub-operation;
the server application program includes a first server module and a second server module for a second sub-operation;
wherein the operation includes the first and second sub-operation; and
the method including selecting
- one of the first client module and the first server module to perform the first sub-operation; and
- one of the second client module the second server module to perform the second sub-operation.

27. Method of one of the claims 19 - 26, comprising at least one of
- transmitting instructions corresponding to the first or second sub-operation on the data file; and
- receiving instructions corresponding to the first or second sub-operation on the data file.

28. Method for local or remote processing of a data file in a client and server system, comprising:
receiving information on a selection of a server application program at a server unit, if in a selection step at a client unit a server application program is selected from one of a client application program and the server application program for performing an operation;
retrieving the data file at the server unit and performing the operation on the data file; and
transmitting a result of the operation to the client unit.

29. Method of claim 28, comprising receiving from the client unit an identifier of the server application program and control information for controlling the operation, in case the server application program is selected.

30. Method of one of the claims 28 and 29, comprising receiving information from the client unit to switch between the client application program and the server application program during performing the operation.

31. Method of one of the claims 28 - 30, wherein
the server application program includes a first server module and a second server module for a second sub-operation;
the client application program includes a first client module and a second client module for a first sub-operation;
wherein the operation includes the first and second sub-operation; and
the method including receiving information on a selection of
- one of the first client module and the first server module to perform the first sub-operation; and
- one of the second client module the second server module to perform the second sub-operation.

32. Method of one of the claims 28 - 31, comprising at least one of
- transmitting instructions corresponding to the first or second sub-operation on the data file; and
- receiving instructions corresponding to the first or second sub-operation on the data file.

33. Method of one of the claims 18 - 32, wherein the operation includes at least one of:
- locally visualizing the data file at the client unit including rendering;
- editing the data file; and
- performing mathematical or logical operations on contents of the data file.

34. A computer readable medium, having a program recorded thereon, where the program is to make the computer execute the method of one of the claims 18 - 33.

35. A computer program product comprising the computer readable medium according to claim 32.
